Europäisches Patentamt

European Patent Office

Office européen des brevets

(11) Veröffentlichungsnummer: **0 086 933**
A2

(12) # EUROPÄISCHE PATENTANMELDUNG

(21) Anmeldenummer: 83100094.8

(22) Anmeldetag: 07.01.83

(51) Int. Cl.³: **D 21 B 1/32**
**D 21 B 1/34, D 21 D 1/00**
**D 21 F 1/08**

---

(30) Priorität: 20.02.82 DE 3206200

(43) Veröffentlichungstag der Anmeldung:
31.08.83 Patentblatt 83/35

(84) Benannte Vertragsstaaten:
AT BE CH FR GB IT LI LU NL SE

(71) Anmelder: Badische Karton- und Pappenfabrik
Zweigwerk der Herzberger Papierfabrik Ludwig
Osthushenrich GmbH & Co KG
Fabrikstrasse 1
D-7562 Gernsbach(DE)

(72) Erfinder: Friedrich, Georg, Dipl.-Ing.
Brunnäcker 1
D-7562 Gernsbach(DE)

(74) Vertreter: Gramm, Werner, Prof. Dipl.-Ing. et al,
Patentanwälte Gramm + Lins Theodor-Heuss-Strasse 2
D-3300 Braunschweig(DE)

---

(54) Verfahren zur Regelung der Stoffdichte in einem Stofflöser.

(57) Bei einem Verfahren zur Regelung der Stoffdichte bei
der Auflösung von Papier- oder Kartonabfällen in einem
Stofflöser erfolgt die Konsistenzmessung unmittelbar im
Stofflösertrog. In Abhängigkeit von dieser Messung wird die
Drehzahl einer Ableerpumpe geregelt. Zur Verringerung der
Stoffdichte wird Verdünnungswasser geregelt zugegeben
und zwar in Abhängigkeit vom Niveau im Stofflösertrog.

EP 0 086 933 A2

Dipl.-Ing. Prof. Werner Gramm
Dipl.-Phys. Edgar Lins

**0086933**

D-3300 Braunschweig

.ische Karton- und Pappenfabrik
igwerk der Herzberger Papierfabrik
.wig Osthushenrich GmbH & Co.KG
rikstraße 1

2   Gernsbach

Telefon:      (05 31) 8 00 79
Telex:         09 52 620

Anwaltsakte 102-15 EP-1
Datum        5.Jan.1983

rfahren zur Regelung der Stoffdichte in einem Stofflöser"

Erfindung betrifft ein Verfahren zur Regelung der Stoffhte bei der Auflösung von Papier- oder Kartonabfällen in
em Stofflöser, in dessen Trog zur Verringerung der Stoffhte Verdünnungswasser geregelt zugegeben und aus dem der
serbrei über eine Ableerpumpe abgefördert werden, wobei zur
uerung des Verfahrens u.a. eine kontinuierliche Konsistenzssung durchgeführt wird.

in den Stofflösertrog kontinuierlich eingegebenen Abfallgen sind nicht konstant, so daß sich auch die Konsistenz
s aufgelösten Faserbreis ändert. Bei bekannten Verfahren
rd die Konsistenz des Faserbreis in der Druckleitung hinter
r Ableerpumpe gemessen. Ein Teilstrom der geförderten Faserimenge wird dann so lange im Kreislauf in den Stofflösertrog
rückgeführt, bis die gewünschte Konsistenz erreicht ist.

n wesentlicher Nachteil dieses Verfahrens ist darin zu sehen,
ß die Ableerpumpe ständig mit der maximal abzufördernden Menge
aufschlagt ist und dadurch hohe Energiekosten verursacht.

- 2 -

- 2 -

Bei einem zweiten bekanntgewordenen Verfahren ist für die Messung der Stoffdichte ein eigener Kreislauf vorgesehen, der mit einer kleinen Pumpe konstant beschickt wird. Auch in diesem Fall läuft die Ableerpumpe ständig mit und fördert so lange im Kreis, bis die Stoffdichte im gewünschten Bereich liegt. Die Umsteuerung erfolgt dann durch pneumatisch betätigte Schieber.

Der Erfindung liegt die Aufgabe zugrunde, das eingangs erläuterte Verfahren hinsichtlich des Energieaufwandes zu verbessern.

Diese Aufgabe wird gemäß der Erfindung durch folgende Merkmale gelöst:

a) Die Konsistenzmessung erfolgt unmittelbar im Stofflösertrog;

b) in Abhängigkeit von der jeweils gemessenen Konsistenz des Faserbreis wird die Drehzahl der Ableerpumpe geregelt und zwar derart, daß bei steigender Stoffdichte die Drehzahl erhöht wird;

c) die Regelung der Zugabe des Verdünnungswassers erfolgt in Abhängigkeit vom Niveau im Stofflösertrog, wobei bei fallendem Niveau Verdünnungswasser zugegeben bzw. die zugegebene Menge erhöht wird.

Zur Durchführung des neuen Verfahrens wird also der Konsistenzgeber unmittelbar am Stofflösertrog angeflanscht. Das Ausgangssignal geht auf die drehzahlgeregelte Ableerpumpe. Bei steigender Stoffdichte wird die Drehzahl der Ableerpumpe erhöht; dadurch fällt das Niveau im Stofflösertrog, was wiederum eine verstärkte Zugabe von Verdünnungswasser auslöst. Bei niedriger Stoffdichte dreht die Ableerpumpe langsamer und fördert dadurch geringere Faserbreimengen ab, so daß sich die niveaugesteuerte Wasserzugabe verringert, während gleichzeitig der zu lösende Faserstoff unab-

- 3 -

- 3 -

.ängig hiervon in den Stofflösertrog eingebracht wird. Dabei
:ind die üblichen Sicherheitsvorkehrungen gegen ein Überlaufen
les Stofflösertroges zu treffen.

)a erfindungsgemäß die Stoffdichteänderungen unmittelbar im
:tofflösertrog gemessen werden, lassen sich Stoffdichteänderungen
:ofort erkennen und dementsprechend schnell ausgleichen.

Im Stofflösertrog läuft üblicherweise ein Stofflöserrotor um,
lessen Drehzahl maßgebend ist für die Auflösegeschwindigkeit der
Abfälle. Es ist daher vorteilhaft, wenn in Abhängigkeit von der
jeweils gemessenen Konsistenz des Faserbreis auch die Drehzahl
eines im Stofflösertrog umlaufenden Stofflöserrotors geregelt
wird.

Zur weiteren Energieeinsparung ist es vorteilhaft, wenn als
.Antrieb für den Stofflöserrotor ein polumschaltbarer Motor verwendet wird. Derartige Motoren geben ihre volle Drehzahl nur
dann ab, wenn die anfallende Ausschußmenge einen bestimmten Wert
übersteigt. Jedoch kann für den genannten Antrieb auch ein
drehzahlregelbarer Motor vorgesehen werden.

- 4 -

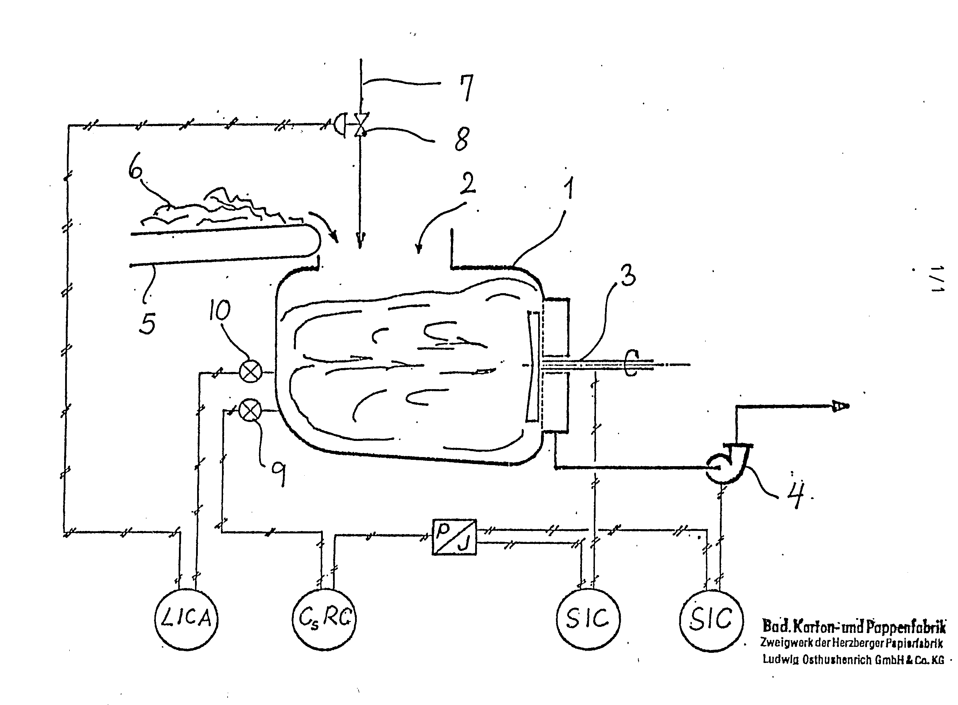

In der Zeichnung sind ein Stofflöser sowie seine Steuerung
schematisch dargestellt.

Vorgesehen ist ein Stofflösertrog 1 mit einer oberen Einfüllöffnung 2 und einem Stofflöserrotor 3, der von einem nicht dargestellten Motor angetrieben wird. Aus dem Stofflösertrog 1 wird
der aufgelöste Faserbrei über eine drehzahlregelbare Ableerpumpe 4 abgefördert. Die Beschickung des Stofflösertroges 1 erfolgt über ein Förderband 5, von dem abgeförderte Papierabfälle 6
in die genannte Einfüllöffnung 2 abgeworfen werden. Außerdem ist
eine Leitung 7 für die Zugabe von Verdünnungswasser vorgesehen.
In diese Leitung ist ein Absperr- und Regelventil 8 eingebaut.

Unmittelbar am Stofflösertrog 1 ist ein Konsistenzgeber 9 angeflanscht, der über $C_S$RC (Consistency recorder controller =
Stoffdichte, Schreiber und Regler) und einen Signalumformer P/J
(pneumatisch-elektrisch) einen SIC (Speed indicator controller =
Drehzahlanzeiger und Regelung) für den Stofflöserrotor 3 sowie
einen SIC für die Ableerpumpe 4 beaufschlagt.

Ferner ist am Stofflösertrog 1 ein Niveaugeber 10 zur Messung des
jeweiligen Niveaus im Stofflösertrog vorgesehen. Dieser Niveaugeber 10 beaufschlagt über einen LICA (Level Indicator Controller
Alarm = Niveau-Anzeige, Regelung und Alarm) das Absperr- und
Regelventil 8 in der Verdünnungswasser-Leitung 7.

Gr/Gru.

# Patentanwälte GRAMM + LINS

-7-

Dipl.-Ing. Prof. Werner Gramm
Dipl.-Phys. Edgar Lins

**0086933**

D-3300 Braunschweig

Badische Karton- und Pappenfabrik
Zweigwerk der Herzberger Papierfabrik
Ludwig Osthushenrich GmbH & Co.KG
Fabrikstraße 1

7562   Gernsbach

Telefon:      (05 31) 8 00 7'
Telex:        09 52 620

Anwaltsakte 1 0 2 - 1 5   E P - 1
Datum       5. Jan. 1983

Patentansprüche:

1. Verfahren zur Regelung der Stoffdichte bei der Auflösung von
Papier- oder Kartonabfällen in einem Stofflöser, in dessen
Trog (1) zur Verringerung der Stoffdichte Verdünnungswasser
geregelt zugegeben und aus dem der Faserbrei über eine
Ableerpumpe (4) abgefördert werden, wobei zur Steuerung des
Verfahrens u.a. eine kontinuierliche Konsistenzmessung
durchgeführt wird, g e k e n n z e i c h n e t   durch folgende Merkmale:

   a) Die Konsistenzmessung erfolgt unmittelbar im Stofflösertrog (1);

   b) in Abhängigkeit von der jeweils gemessenen Konsistenz
   des Faserbreis wird die Drehzahl der Ableerpumpe (4)
   geregelt und zwar derart, daß bei steigender Stoffdichte
   die Drehzahl erhöht wird;

   c) die Regelung der Zugabe des Verdünnungswassers erfolgt in
   Abhängigkeit vom Niveau im Stofflösertrog (1), wobei bei
   fallendem Niveau Verdünnungswasser zugegeben bzw. die zugegebene Menge erhöht wird.

- 2 -

0086933

- 2 -

. Verfahren nach Anspruch 1, dadurch gekennzeichnet, daß in Abhängigkeit von der jeweils gemessenen Konsistenz des Faserbreis auch die Drehzahl eines im Stofflösertrog (1) umlaufenden Stofflöserrotors (3) geregelt wird.

. Verfahren nach Anspruch 1 oder 2, dadurch gekennzeichnet, daß
als Antrieb für den Stofflöserrotor (3) ein polumschaltbarer
Motor verwendet wird.

:. Verfahren nach Anspruch 1 oder 2, dadurch gekennzeichnet, daß
als Antrieb für den Stofflöserrotor (3) ein drehzahlregelbarer Motor verwendet wird.

Patentanwälte
G r a m m   +   L i n s
Gr/Gru.

Bad. Karton- und Pappenfabrik
Zweigwerk der Herzberger Papierfabrik
Ludwig Osthushenrich GmbH & Co. KG